# EUROPEAN PATENT APPLICATION

(11) **EP 4 657 863 A1**
(43) Date of publication of application: **03.12.2025**
(21) Application number: 23924520.2
(22) Date of filing: 27.02.2023
(51) Int. Cl.: H04N 21/2389, G06F 21/10, H04N 21/4363, H04L 9/40, H04L 69/24, H04N 21/258, H04N 21/4367, H04N 21/2347, H04N 21/4405, H04N 21/6334, H04N 21/835

(54) **COMMUNICATION METHOD, APPARATUS, AND SYSTEM**

(71) Applicant: Shenzhen Yinwang Intelligent Technologies Co., Ltd., Shenzhen, Guangdong 518110 (CN)
(72) Inventor: LI, Chao, Shenzhen, Guangdong 518129 (CN); PAN, Kai, Shenzhen, Guangdong 518129 (CN)
(74) Representative: Pfenning, Meinig & Partner mbB
(86) International application number: PCT/CN2023/078434
(87) International publication number: WO 2024/178539

(57) **Abstract**

A communication method, apparatus, and system are provided. The method includes: A first network element obtains first indication information, where the first indication information indicates that at least one version in a high-bandwidth digital content protection HDCP version supported by a second network element is not earlier than a first preset version; or the first indication information indicates an HDCP version supported by the second network element, and at least one version in the HDCP version supported by the second network element is not earlier than the first preset version; and the first network element sends a first authentication message to the second network element based on the first indication information, where the first authentication message includes a first random number and capability indication information of the first network element. The communication method in this application may be applied to an intelligent driving device such as a new energy vehicle or an intelligent vehicle, so that packet overheads and duration required when an HDCP transmit end and an HDCP receive end perform authentication can be reduced. This helps the HDCP transmit end and the HDCP receive end quickly enter an encrypted data transmission procedure.

## Description

### TECHNICAL FIELD

This application relates to the field of information transmission technologies, and more specifically, to a communication method, apparatus, and system.

### BACKGROUND

A high-bandwidth digital content protection (high-bandwidth digital content protection, HDCP) technology is a technology that protects uncompressed digital audio and video content and is applicable to a high-speed digital video interface. The technology implements protection by scrambling transmitted content. Currently, released HDCP versions include HDCP 2.0, HDCP 2.1, HDCP 2.2, and HDCP 2.3. Before transmitting HDCP-encrypted data, an HDCP transmit end and an HDCP receive end need to complete a procedure of authentication (authentication), pairing (pairing), locality check (locality check), and session key exchange (session key exchange). However, in a current technology, when later-version HDCP such as HDCP 2.1, HDCP 2.2, or HDCP 2.3 is downward compatible with an HDCP 2.0 version, an extra delay and extra overheads are introduced in an authentication process, resulting in delaying an occasion for the HDCP transmit end and the HDCP receive end to enter encrypted data transmission.

In view of this, a solution that can reduce a delay and overheads of an authentication process needs to be urgently developed.

### SUMMARY

This application provides a communication method, apparatus, and system, so that packet overheads required when an HDCP transmit end and an HDCP receive end perform authentication can be reduced, and duration required for authentication performed by the HDCP transmit end and the HDCP receive end can be reduced. This helps the HDCP transmit end and the HDCP receive end quickly enter an encrypted data transmission procedure.

According to a first aspect, a communication method is provided. The method may be performed by an intelligent driving device; or may be performed by a chip or a circuit used in the intelligent driving device, for example, performed by a chip or a circuit in a computing platform of the intelligent driving device. This is not limited in this application.

The method includes: A first network element obtains first indication information, where the first indication information indicates that at least one version in a high-bandwidth digital content protection HDCP version supported by a second network element is not earlier than a first preset version; or the first indication information indicates an HDCP version supported by the second network element, and at least one version in the HDCP version supported by the second network element is not earlier than the first preset version; and the first network element sends a first authentication message to the second network element based on the first indication information, where the first authentication message includes a first random number and capability indication information of the first network element.

In the foregoing technical solution, in an authentication process for the first network element and the second network element, when the HDCP version supported by the second network element meets a specific condition, the first random number and the capability indication information of the first network element are sent at a time by using the first authentication message. This helps reduce duration and packet overheads required for sending the first random number and the capability indication information of the first network element, helps shorten authentication time, and accelerates a start procedure of encrypted data transmission between the first network element and the second network element. In addition, this helps improve compatibility between a latter HDCP version and an earlier HDCP version.

The first network element and the second network element may be network elements used for high-speed data transmission. The first network element is a transmit end of encrypted data, and the second network element is a receive end of the encrypted data. For example, the first network element may be a network element that converts a parallel signal into a serial signal, for example, a serializer. The second network element may be a network element that converts a serial signal into a parallel signal, for example, a deserializer.

For example, the first random number is used to start an authentication procedure for the second network element. The capability indication information indicates at least one of the following capabilities: a capability of preprocessing data and/or a message transmitted between the first network element and the second network element, for example, a capability of precomputing of locality check; and a capability of classifying data content transmitted between the first network element and the second network element, for example, a capability of classifying audio and video stream types.

For example, the first random number may be generated by the first network element. For example, the first random number may include r_tx in an AKE_init packet, and the capability indication information of the first network element may include TRANSMITTER_CAPABILITY_MASK in an AKE_Transmitter_Info packet.

In some possible implementations, the first network element obtains the first indication information when the first network element generates the first random number; or the first network element obtains the first indication information when starting authentication and key exchange (authentication and key exchange, AKE).

For example, that a first network element obtains first indication information may include at least one of the following: The first network element receives the first indication information sent by the second network element; or the first network element obtains the first indication information from a processor, for example, a system-on-a-chip (system-on-a-chip, SOC), configured to control a display apparatus, where the SOC stores information about the HDCP version supported by the second network element, and/or information indicating that the at least one version in the HDCP version is not earlier than the first preset version; or if the first network element internally stores information about the HDCP version supported by the second network element, and/or information indicating that the at least one version in the HDCP version is not earlier than the first preset version, the first network element internally obtains the first indication information.

For example, the first preset version is an earliest version that supports combined sending of an initialization packet and a first information packet in HDCP versions, for example, an HDCP 2.1 version; or the first preset version may be an HDCP version later than the foregoing earliest version, for example, an HDCP 2.2 version.

It may be understood that the authentication procedure between the first network element and the second network element is to prepare for subsequent transmission of audio and video data between the first network element and the second network element.

With reference to the first aspect, in some implementations of the first aspect, the first authentication message includes a message type field, the message type field indicates that the first authentication message is a message combining an initialization packet and a first information packet, the initialization packet is used to enable identity authentication on the second network element, the initialization packet includes the first random number, and the first information packet includes the capability indication information.

For example, the initialization packet may be an AKE_init packet, and the first information packet may be a packet indicating information about the first network element, for example, an AKE_Transmitter_Info packet.

When the initialization packet and the first information packet are separately sent, a packet identifier field (for example, msg_id) needs to be set in each packet. In the foregoing technical solution, the message type field is set in the first authentication message, and one field may indicate that the first authentication message includes the initialization packet and the first information packet, so that field overheads required for sending the initialization packet and the first information packet can be reduced. In addition, the second network element may further determine, by using the message type field, to perform combined sending of an initialization response packet and a second information packet.

With reference to the first aspect, in some implementations of the first aspect, the first authentication message further includes a flag field, and the flag field indicates that the first authentication message includes a part or all of content of the initialization packet and the first information packet.

In some possible implementations, the first authentication message may include the part of the content of the initialization packet and the first information packet, for example, include the first random number of the initialization packet and the capability indication information, of the first network element, of the first information packet; or the first authentication message may include all of the content of the initialization packet and the first information packet.

In the foregoing technical solution, the content of the first authentication message is indicated to the second network element by using the flag field, so that the second network element determines whether the first authentication message includes all of the content of the initialization packet and the first information packet.

With reference to the first aspect, in some implementations of the first aspect, that the first indication information indicates that the at least one version in the HDCP version supported by the second network element is not earlier than the first preset version includes: The first indication information indicates that the second network element supports combined sending of the initialization packet and the first information packet.

In some possible implementations, if one or more HDCP versions supported by the second network element are all earlier than the first preset version, the first information packet does not need to be transmitted in the authentication process between the first network element and the second network element, and therefore combined sending of the initialization packet and the first information packet does not need to be performed.

In the foregoing technical solution, it is directly indicated to the first network element that the second network element supports combined sending of the initialization packet and the first information packet, so that the first network element does not need to decide, based on the HDCP version supported by the second network element, whether to perform combined sending of the packet. This helps reduce complexity of message or data processing performed by the first network element in the authentication process.

With reference to the first aspect, in some implementations of the first aspect, before that a first network element obtains first indication information, the method further includes: The first network element sends a query message to the second network element, where the query message is used to query whether the second network element accepts combined sending of the initialization packet and the first information packet.

Further, the first network element receives, from the second network element, the first indication information indicating that the second network element supports combined sending of the initialization packet and the first information packet.

With reference to the first aspect, in some implementations of the first aspect, the first indication information indicates the HDCP version supported by the second network element, and before that a first network element obtains first indication information, the method further includes: The first network element sends a request message to the second network element, where the request message is used to request to obtain the HDCP version of the second network element; and that a first network element obtains first indication information includes: the first network element receives the first indication information sent by the second network element.

In some possible implementations, the request message includes information about an HDCP version supported by the first network element.

With reference to the first aspect, in some implementations of the first aspect, the first indication information indicates the HDCP version supported by the second network element, and the method further includes: The first network element determines, based on the first indication information, a first HDCP version used to transmit audio and video information with the second network element, where the first HDCP version is not earlier than a second preset version, and the second preset version is not earlier than the first preset version; and the first network element sends the first authentication message to the second network element, where the first authentication message further includes information about the first HDCP version.

In some possible implementations, if two or more HDCP versions supported by the second network element are later than the first preset version, and two or more HDCP versions supported by the first network element are later than the first preset version, the first network element needs to determine the first HDCP version based on the HDCP version supported by the second network element.

In the foregoing technical solution, the first network element indicates, to the second network element by using the first authentication message, the first HDCP version used to transmit the audio and video information, so that the second network element determines a specific HDCP version used by the first network element to transmit the audio and video information.

With reference to the first aspect, in some implementations of the first aspect, the method further includes: The first network element receives a second authentication message sent by the second network element, where the second authentication message includes information used to authenticate the second network element and capability indication information of the second network element.

For example, the second authentication message is a message combining the initialization response packet and the second information packet, the initialization response packet includes the information used to authenticate the second network element, and the second information packet includes the capability indication information of the second network element.

For example, the initialization response packet may be an AKE_Send_Cert packet, and the second information packet may be a packet indicating information about the second network element, for example, an AKE_Receiver_Info packet. Further, the information used to authenticate the second network element may include REPEATER and/or cert_rx in the AKE_Send_Cert packet, and the capability indication information of the second network element may include RECEIVER_CAPABILITY_MASK in the AKE _Receiver_Info packet.

In the foregoing technical solution, the second network element sends the message combining the initialization response packet and the second information packet to the first network element, so that duration and packet overheads required for the authentication process for the first network element and the second network element can be further reduced.

According to a second aspect, a communication method is provided. The method may be performed by an intelligent driving device; or may be performed by a chip or a circuit used in the intelligent driving device, for example, performed by a chip or a circuit in a display apparatus of the intelligent driving device. This is not limited in this application.

The method includes: A second network element sends first indication information to a first network element, where the first indication information indicates that at least one version in a high-bandwidth digital content protection HDCP version supported by the second network element is not earlier than a first preset version; or the first indication information indicates an HDCP version supported by the second network element, and at least one version in the HDCP version supported by the second network element is not earlier than the first preset version; and the second network element receives a first authentication message sent by the first network element, where the first authentication message includes a first random number and capability indication information of the first network element.

In the foregoing technical solution, in an authentication process for the first network element and the second network element, when the HDCP version supported by the second network element meets a specific condition, the first random number and the capability indication information of the first network element that are sent by the first network element at a time by using the first authentication message are received. This helps reduce duration and packet overheads required for sending the first random number and the capability indication information of the first network element, helps shorten authentication time, and accelerates a start procedure of encrypted data transmission between the first network element and the second network element.

With reference to the second aspect, in some implementations of the second aspect, the first authentication message includes a message type field, the message type field indicates that the first authentication message is a message combining an initialization packet and a first information packet, the initialization packet is used to enable identity authentication on the second network element, the initialization packet includes the first random number, and the first information packet includes the capability indication information.

In the foregoing technical solution, the message type field is set in the first authentication message, and one field may indicate that the first authentication message includes the initialization packet and the first information packet, so that field overheads required for receiving and sending the initialization packet and the first information packet can be reduced. In addition, the second network element may determine, based on the message type field, to perform combined sending of an initialization response packet and a second information packet.

With reference to the second aspect, in some implementations of the second aspect, the first authentication message further includes a flag field, and the flag field indicates that the first authentication message includes a part or all of content of the initialization packet and the first information packet.

In the foregoing technical solution, the second network element may determine, based on the flag field, whether the first authentication message includes all of the content of the initialization packet and the first information packet, to determine whether it is necessary to restore all of the content of the initialization packet and the first information packet in the first authentication message.

With reference to the second aspect, in some implementations of the second aspect, that the first indication information indicates that the at least one version in the HDCP version supported by the second network element is not earlier than the first preset version includes: The first indication information indicates that the second network element supports combined sending of the initialization packet and the first information packet.

In the foregoing technical solution, the second network element directly indicates to the first network element that the second network element supports combined sending of the initialization packet and the first information packet, so that the first network element does not need to decide, based on the HDCP version supported by the second network element, whether to perform combined sending of the packet. This helps reduce complexity of message or data processing performed by the first network element in the authentication process.

With reference to the second aspect, in some implementations of the second aspect, before that a second network element sends first indication information to a first network element, the method further includes: The second network element receives a query message sent by the first network element, where the query message is used to query whether the second network element accepts combined sending of the initialization packet and the first information packet.

With reference to the second aspect, in some implementations of the second aspect, the first indication information indicates the HDCP version supported by the second network element, and before that a second network element sends first indication information to a first network element, the method further includes: The second network element receives a request message sent by the first network element, where the request message is used to request to obtain the HDCP version of the second network element; and that a second network element sends first indication information to a first network element includes: the second network element sends the first indication information to the first network element based on the request message.

With reference to the second aspect, in some implementations of the second aspect, the first authentication message further includes information about a first HDCP version used to transmit audio and video information between the first network element and the second network element, the first HDCP version is not earlier than a second preset version, and the second preset version is not earlier than the first preset version.

In the foregoing technical solution, because the first authentication message includes the information about the first HDCP version used to transmit the audio and video information, the second network element can perform a subsequent data processing procedure without restoring all of the content of the initialization packet and the first information packet in the first authentication message. This helps reduce complexity of message or data processing performed by the second network element in the authentication process.

With reference to the second aspect, in some implementations of the second aspect, the method further includes: The second network element sends a second authentication message to the first network element, where the second authentication message includes information used to authenticate the second network element and capability indication information of the second network element.

In the foregoing technical solution, the second network element sends a message combining the initialization response packet and the second information packet to the first network element, so that duration and packet overheads required for the authentication process for the first network element and the second network element can be further reduced.

With reference to the second aspect, in some implementations of the second aspect, the second authentication message is the message combining the initialization response packet and the second information packet, the initialization response packet includes the information used to authenticate the second network element, the second information packet includes the capability indication information of the second network element, and that the second network element sends a second authentication message to the first network element includes: The second network element sends the second authentication message to the first network element based on the message type field.

According to a third aspect, a communication apparatus is provided. The apparatus includes an obtaining unit and a transceiver unit. The obtaining unit is configured to obtain first indication information, where the first indication information indicates that at least one version in a high-bandwidth digital content protection HDCP version supported by a second network element is not earlier than a first preset version; or the first indication information indicates an HDCP version supported by the second network element, and at least one version in the HDCP version supported by the second network element is not earlier than the first preset version; and the transceiver unit is configured to send a first authentication message to the second network element based on the first indication information, where the first authentication message includes a first random number and capability indication information of the first network element.

With reference to the third aspect, in some implementations of the third aspect, the first authentication message includes a message type field, the message type field indicates that the first authentication message is a message combining an initialization packet and a first information packet, the initialization packet is used to enable identity authentication on the second network element, the initialization packet includes the first random number, and the first information packet includes the capability indication information.

With reference to the third aspect, in some implementations of the third aspect, the first authentication message further includes a flag field, and the flag field indicates that the first authentication message includes a part or all of content of the initialization packet and the first information packet.

With reference to the third aspect, in some implementations of the third aspect, that the first indication information indicates that the at least one version in the HDCP version supported by the second network element is not earlier than the first preset version includes: The first indication information indicates that the second network element supports combined sending of the initialization packet and the first information packet.

With reference to the third aspect, in some implementations of the third aspect, the transceiver unit is configured to: before the obtaining unit obtains the first indication information, send a query message to the second network element, where the query message is used to query whether the second network element accepts combined sending of the initialization packet and the first information packet.

With reference to the third aspect, in some implementations of the third aspect, the first indication information indicates the HDCP version supported by the second network element, and the transceiver unit is configured to: before the obtaining unit obtains the first indication information, send a request message to the second network element, where the request message is used to request to obtain the HDCP version of the second network element; and the obtaining unit is configured to receive the first indication information sent by the second network element.

With reference to the third aspect, in some implementations of the third aspect, the first indication information indicates the HDCP version supported by the second network element, and the apparatus further includes a determining unit. The determining unit is configured to determine, based on the first indication information, a first HDCP version used to transmit audio and video information with the second network element, where the first HDCP version is not earlier than a second preset version, and the second preset version is not earlier than the first preset version; and the first network element sends the first authentication message to the second network element, where the first authentication message further includes information about the first HDCP version.

With reference to the third aspect, in some implementations of the third aspect, the transceiver unit is further configured to receive a second authentication message sent by the second network element, where the second authentication message includes information used to authenticate the second network element and capability indication information of the second network element.

According to a fourth aspect, a communication apparatus is provided. The apparatus includes a sending unit and a receiving unit. The sending unit is configured to send first indication information to a first network element, where the first indication information indicates that at least one version in a high-bandwidth digital content protection HDCP version supported by a second network element is not earlier than a first preset version; or the first indication information indicates an HDCP version supported by the second network element, and at least one version in the HDCP version supported by the second network element is not earlier than the first preset version; and the receiving unit is configured to receive a first authentication message sent by the first network element, where the first authentication message includes a first random number and capability indication information of the first network element.

With reference to the fourth aspect, in some implementations of the fourth aspect, the first authentication message includes a message type field, the message type field indicates that the first authentication message is a message combining an initialization packet and a first information packet, the initialization packet is used to enable identity authentication on the second network element, the initialization packet includes the first random number, and the first information packet includes the capability indication information.

With reference to the fourth aspect, in some implementations of the fourth aspect, the first authentication message further includes a flag field, and the flag field indicates that the first authentication message includes a part or all of content of the initialization packet and the first information packet.

With reference to the fourth aspect, in some implementations of the fourth aspect, that the first indication information indicates that the at least one version in the HDCP version supported by the second network element is not earlier than the first preset version includes: The first indication information indicates that the second network element supports combined sending of the initialization packet and the first information packet.

With reference to the fourth aspect, in some implementations of the fourth aspect, the receiving unit is further configured to: before the sending unit sends the first indication information to the first network element, receive a query message sent by the first network element, where the query message is used to query whether the second network element accepts combined sending of the initialization packet and the first information packet.

With reference to the fourth aspect, in some implementations of the fourth aspect, the first indication information indicates the HDCP version supported by the second network element, and the receiving unit is further configured to: before the sending unit sends the first indication information to the first network element, receive a request message sent by the first network element, where the request message is used to request to obtain the HDCP version of the second network element; and the sending unit is configured to send the first indication information to the first network element based on the request message.

With reference to the fourth aspect, in some implementations of the fourth aspect, the first authentication message further includes information about a first HDCP version used to transmit audio and video information between the first network element and the second network element, the first HDCP version is not earlier than a second preset version, and the second preset version is not earlier than the first preset version.

With reference to the fourth aspect, in some implementations of the fourth aspect, the sending unit is further configured to send a second authentication message to the first network element, where the second authentication message includes information used to authenticate the second network element and capability indication information of the second network element.

With reference to the fourth aspect, in some implementations of the fourth aspect, the second authentication message is a message combining an initialization response packet and a second information packet, the initialization response packet includes the information used to authenticate the second network element, and the second information packet includes the capability indication information of the second network element; and the sending unit is configured to send the second authentication message to the first network element based on the message type field.

According to a fifth aspect, a communication apparatus is provided. The apparatus includes: a memory, configured to store a computer program; and a processor, configured to execute the computer program stored in the memory, so that the apparatus performs the method according to any possible implementation of the first aspect.

According to a sixth aspect, a communication apparatus is provided. The apparatus includes: a memory, configured to store a computer program; and a processor, configured to execute the computer program stored in the memory, so that the apparatus performs the method according to any possible implementation of the second aspect.

According to a seventh aspect, a communication system is provided. The communication system includes the apparatus according to any possible implementation of the third aspect and the apparatus according to any possible implementation of the fourth aspect; or the communication system includes the apparatus according to any possible implementation of the fifth aspect and the apparatus according to any possible implementation of the sixth aspect.

According to an eighth aspect, an intelligent driving device is provided. The intelligent driving device includes the communication system according to any possible implementation of the seventh aspect.

With reference to the eighth aspect, in some implementations of the eighth aspect, the intelligent driving device is a vehicle.

According to a ninth aspect, a computer program product is provided. The computer program product includes computer program code. When the computer program code is run on a computer, the computer is enabled to perform the method according to any possible implementation of the first aspect or the second aspect.

It should be noted that all or some of the computer program code may be stored in a first storage medium. The first storage medium may be encapsulated together with a processor, or may be encapsulated separately from a processor.

According to a tenth aspect, a computer-readable medium is provided. The computer-readable medium stores instructions. When the instructions are executed by a processor, the processor is enabled to implement the method according to any possible implementation of the first aspect or the second aspect.

According to an eleventh aspect, a chip is provided. The chip includes a circuit, and the circuit is configured to perform the method according to any possible implementation of the first aspect or the second aspect.

### BRIEF DESCRIPTION OF DRAWINGS

FIG. 1 is a diagram of message exchange in an HDCP authentication process;
FIG. 2 is a block diagram of a communication system according to an embodiment of this application;
FIG. 3 is a block diagram of an intelligent driving device according to an embodiment of this application;
FIG. 4 is a schematic flowchart of a communication method according to an embodiment of this application;
FIG. 5 is a schematic flowchart of a communication method according to an embodiment of this application;
FIG. 6 is a diagram of a message format according to an embodiment of this application;
FIG. 7 is a schematic flowchart of a communication method according to an embodiment of this application;
FIG. 8 is another diagram of a message format according to an embodiment of this application;
FIG. 9 is a block diagram of a communication apparatus according to an embodiment of this application;
FIG. 10 is a block diagram of a communication apparatus according to an embodiment of this application; and
FIG. 11 is a block diagram of a communication apparatus according to an embodiment of this application.

### DESCRIPTION OF EMBODIMENTS

In descriptions of embodiments of this application, unless otherwise specified, "/" means "or". For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, at least one means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different described objects, and impose no limitation on locations, sequences, priorities, quantities, content, or the like of the described objects. In embodiments of this application, use of the prefix words, for example, ordinal numbers, used to distinguish between the described objects does not constitute a limitation on the described objects. For descriptions of the described objects, refer to the descriptions of the context in the claims or embodiments. The use of such prefix words should not constitute a redundant limitation.

As described above, an HDCP technology scrambles transmitted content to protect uncompressed digital audio and video content, and is applicable to high-speed digital video interfaces, for example, a high definition multimedia interface (high definition multimedia interface, HDMI), a display interface (display port, DP), and a digital visual interface (digital visual interface, DVI). Currently, commonly used HDCP versions include HDCP 2.0, HDCP 2.1, HDCP 2.2 and HDCP 2.3. Before transmitting HDCP-encrypted data, an HDCP transmit end and an HDCP receive end (for example, a serializer and a deserializer) need to complete a procedure of authentication, pairing, locality check, and session key exchange.

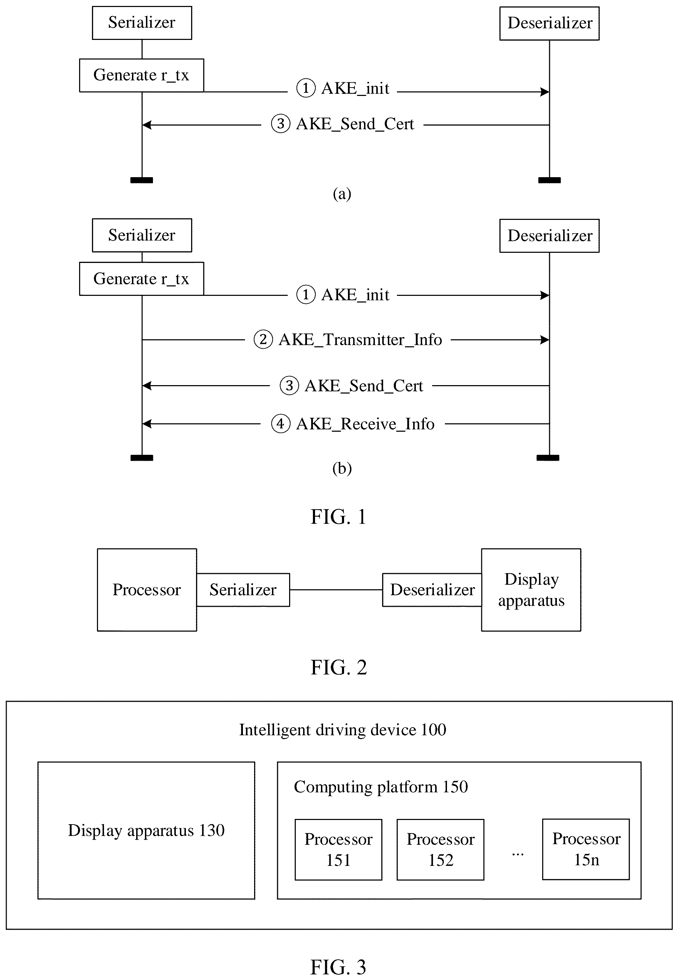

When latter-version HDCP such as HDCP 2.1, HDCP 2.2, or HDCP 2.3 is downward compatible with an HDCP 2.0 version, an extra delay and extra overheads are introduced in an authentication process. FIG. 1 shows information exchange that needs to be performed between an HDCP transmit end and an HDCP receive end in an authentication process. As shown in (a) in FIG. 1, in an HDCP 2.0 version, included ① AKE_init and ③ AKE_Send_Cert need to be exchanged between the HDCP transmit end and the HDCP receive end. As shown in (b) in FIG. 1, in HDCP 2.1, HDCP 2.2, and HDCP 2.3 versions, included ① AKE_init, ② AKE_Transmitter_Info, ③ AKE_Send_Cert, and ④ AKE_Receiver_Info need to be exchanged between the HDCP transmit end and the HDCP receive end. Specific content and sizes of the foregoing messages ① to ④ are shown in Table 1.

**Table 1**

| **Sender** | **Message name** | **Message size (byte)** | **Message content** |
|---|---|---|---|
| Serializer | AKE_init | 9 | msg_id (1 byte) = 0x02; and r_tx (8 bytes): random number generated by the serializer |
| Serializer | AKE_Transmitter_Info | 6 | msg_id (1 byte) = 0x13 |
| | | | LENGTH (2 bytes): message length |
| | | | VERSION (1 byte): HDCP version used to transmit audio and video information TRANSMITTER_CAPABILITY_MASK (Tx_C_MASK for short, 2 bytes): serializer capability indication |
| Deserializer | AKE_Send_Cert | 524 | msg_id (1 byte) = 0x03 |
| | | | REPEATER (1 byte): indicates whether the deserializer is relayed |
| | | | cert_rx (522 bytes): includes a deserializer number, a deserializer public key, and a signature |
| Deserializer | AKE_Receiver_Info | 6 | msg_id (1 byte) = 0x14 |
| | | | LENGTH (2 bytes): message length |
| | | | VERSION (1 byte): HDCP version used to transmit audio and video information RECEIVER_CAPABILITY_MASK |
| | | | (Rx_C_MASK for short, 2 bytes): deserializer capability indication |

In other words, an authentication process for HDCP 2.1, HDCP 2.2, and HDCP 2.3 introduces an extra delay and extra message receiving and sending overheads, resulting in delaying an occasion for the HDCP transmit end and the HDCP receive end to enter encrypted data transmission.

In view of this, embodiments of this application provide a communication method, apparatus, and system. When both a serializer and a deserializer support a version later than HDCP 2.0, the serializer may perform combined sending of the foregoing messages ① and ②, and the deserializer may perform combined sending of the foregoing messages ③ and ④, to reduce duration required for the serializer and the deserializer to encapsulate and decapsulate messages, thereby shortening time required for an HDCP authentication procedure, and accelerating start of encrypted data transmission.

The following describes technical solutions in embodiments of this application with reference to accompanying drawings.

FIG. 2 is a diagram of an architecture of a system according to an embodiment of this application. As shown in FIG. 2, the system includes a processor, a serializer, a deserializer, and a display apparatus. The display apparatus is driven by the processor to display an image. Specifically, the processor is connected to the serializer, and sends a display signal to the serializer. The serializer encrypts the display signal and sends the encrypted display signal to the deserializer. The deserializer converts the encrypted display signal, and inputs the converted display signal in the display apparatus. The display apparatus displays the converted display signal. Before the serializer sends the encrypted display signal to the deserializer, authentication between the serializer and the deserializer needs to be completed.

For example, the processor shown in FIG. 2 may be an SOC.

In this embodiment of this application, in an authentication procedure of the serializer and the deserializer, the serializer obtains information about an HDCP version supported by the deserializer, or the serializer obtains information about whether the deserializer supports combined receiving of ① and ② (and/or combined sending of ③ and ④) above. When the HDCP version supported by the serializer and the deserializer meets a preset condition, or the deserializer supports combined receiving of ① and ②, the serializer performs combined sending of ① and ② to the deserializer, to reduce duration required for an authentication process for an HDCP transmit end and an HDCP receive end, thereby shortening time required for an HDCP authentication procedure, and accelerating start of a subsequent encrypted data transmission procedure.

FIG. 3 is a functional block diagram of an intelligent driving device 100 according to an embodiment of this application. The intelligent driving device 100 may include a display apparatus 130 and a computing platform 150. The display apparatus 130 may include a vehicle-mounted display and a projection display. The vehicle-mounted display is a physical display, and is an important part of a vehicle-mounted infotainment system. A plurality of displays may be disposed in a cabin, for example, a digital instrument screen, a central display screen, a display in front of a passenger in a front-passenger seat (also referred to as a front passenger), a display in front of a rear-seat passenger on the left, and a display in front of a rear-seat passenger on the right, and even a vehicle window may be used as a display for displaying. The projection display may include a head-up display (head-up display, HUD), also referred to as a head-up display system. For example, the HUD includes a combiner head-up display (combiner-HUD, C-HUD) system, a windshield head-up display (windshield-HUD, W-HUD) system, and an augmented reality head-up display (augmented reality HUD, AR-HUD) system.

Some or all functions of the intelligent driving device 100 may be controlled by the computing platform 150. The computing platform 150 may include one or more processors, for example, processors 151 to 15n (where n is a positive integer), and the processor is a circuit that has a signal processing capability. In an implementation, the processor may be a circuit that has instruction reading and running capabilities, for example, a CPU, a microprocessor, a GPU (which may be understood as a microprocessor), or a digital signal processor (digital signal processor, DSP). In another implementation, the processor may implement a specific function based on a logical relationship of a hardware circuit, and the logical relationship of the hardware circuit is fixed or reconfigurable. For example, the processor is an application-specific integrated circuit (application-specific integrated circuit, ASIC) or a hardware circuit implemented by a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

In this embodiment of this application, the computing platform 150 may control the display apparatus 130 to display a picture. The processor shown in FIG. 2 may include one or more of the processors 151 to 15n. The serializer and the deserializer shown in FIG. 2 may also include one or more of the processors 151 to 15n. The display apparatus shown in FIG. 2 may include the display apparatus 130.

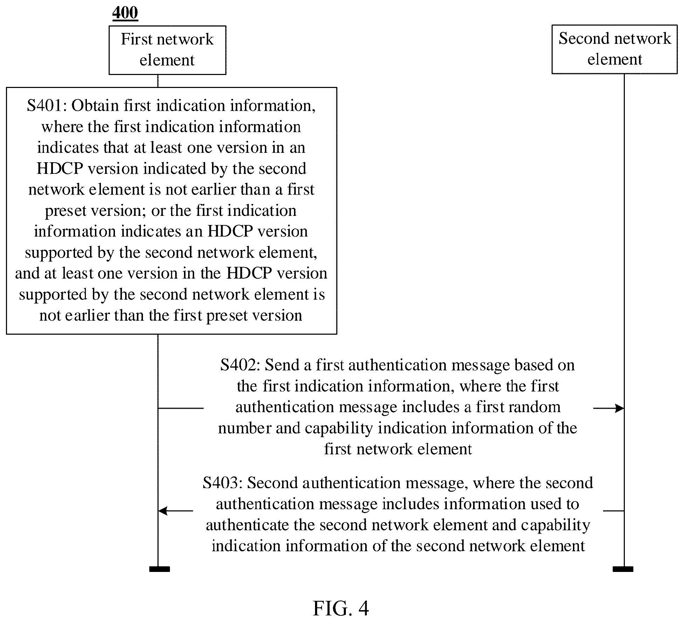

FIG. 4 is a schematic flowchart of a communication method according to an embodiment of this application. The method 400 may be performed by the system shown in FIG. 2, and the method 400 may also be applied to the intelligent driving device 100 shown in FIG. 3. Steps or operations of the communication method shown in FIG. 4 are merely examples for description. In embodiments of this application, other operations or variations of the operations in FIG. 4 may be further performed. The method 400 includes the following steps.

S401: A first network element obtains first indication information, where the first indication information indicates that at least one version in an HDCP version supported by a second network element is not earlier than a first preset version; or the first indication information indicates an HDCP version supported by the second network element, and at least one version in the HDCP version supported by the second network element is not earlier than the first preset version.

For example, the first network element is a transmit end of encrypted data, and the second network element is a receive end of the encrypted data.

For example, the first network element may be a network element that converts a parallel signal into a serial signal, for example, the serializer in the foregoing embodiment. The second network element may be a network element that converts a serial signal into a parallel signal, for example, the deserializer in the foregoing embodiment.

For example, that a first network element obtains first indication information may include at least one of the following: The first network element receives the first indication information sent by the second network element; or the first network element obtains the first indication information from a system-on-a-chip (system-on-a-chip, SOC) configured to control the first network element and the second network element, where the SOC stores information about the HDCP version supported by the second network element, and/or information indicating that the at least one version in the HDCP version is not earlier than the first preset version; or if the first network element internally stores information about the HDCP version supported by the second network element, and/or information indicating that the at least one version in the HDCP version is not earlier than the first preset version, the first network element internally obtains the first indication information.

For example, the first preset version is an earliest version that supports combined sending of an initialization packet and a first information packet in HDCP versions, for example, an HDCP 2.1 version; or the first preset version may be an HDCP version later than the foregoing earliest version, for example, an HDCP 2.2 version.

S402: The first network element sends a first authentication message to the second network element based on the first indication information, where the first authentication message includes a first random number and capability indication information of the first network element.

For example, the first random number is used to start an authentication procedure for the second network element. The capability indication information indicates at least one of the following capabilities: a capability of preprocessing data and/or a message transmitted between the first network element and the second network element, for example, a capability of precomputing of locality check; and a capability of classifying data content transmitted between the first network element and the second network element, for example, classifying audio and video stream types.

In some possible implementations, the first authentication message is a message combining the initialization packet and the first information packet.

For example, the initialization packet may be an AKE_init packet, and the first information packet may be a packet indicating information about the first network element, for example, an AKE_Transmitter_Info packet.

For example, the first random number may be generated by the first network element. For example, the first random number may include r_tx in the AKE_init packet, and the capability indication information of the first network element may include TRANSMITTER_CAPABILITY_MASK in the AKE_Transmitter_Info packet.

S403: The second network element sends a second authentication message to the first network element, where the second authentication message includes information used to authenticate the second network element and capability indication information of the second network element.

For example, the second authentication message is a message combining an initialization response packet and a second information packet, the initialization response packet includes the information used to authenticate the second network element, and the second information packet includes the capability indication information of the second network element.

For example, the initialization response packet may be an AKE_Send_Cert packet, and the second information packet may be a packet indicating information about the second network element, for example, an AKE_Receiver_Info packet. Further, the information used to authenticate the second network element may include REPEATER and/or cert_rx in the AKE_Send_Cert packet, and the capability indication information of the second network element may include RECEIVER_CAPABILITY_MASK in the AKE_Receiver_Info packet.

In some possible implementations, only S401 and S402 may be performed.

According to the communication method provided in this embodiment of this application, when the HDCP version supported by the second network element meets a specific condition, the first network element sends the first random number and the capability indication information of the first network element at a time by using the first authentication message. This helps reduce duration and packet overheads required for sending the first random number and the capability indication information of the first network element, helps shorten authentication time, and accelerates a start procedure of encrypted data transmission between the first network element and the second network element.

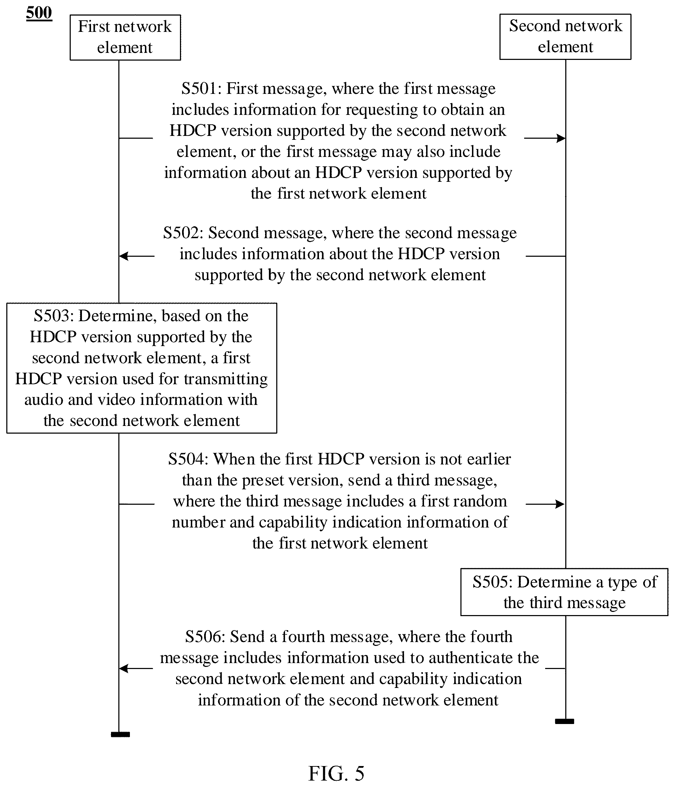

With reference to FIG. 5 to FIG. 8, the following uses an example to describe a specific method for obtaining, by the first network element, the first indication information from the second network element and sending the first authentication message.

FIG. 5 is a schematic flowchart of a communication method according to an embodiment of this application. The method 500 may be performed by the system shown in FIG. 2, and the method 500 may also be applied to the intelligent driving device 100 shown in FIG. 3. Steps or operations of the communication method shown in FIG. 5 are merely examples for description. In embodiments of this application, other operations or variations of the operations in FIG. 5 may be further performed, and not all the operations in FIG. 5 may need to be performed. The method 500 may be understood as extension of the method 400. The method 500 includes the following steps.

S501: A first network element sends a first message to a second network element, where the first message includes information for requesting to obtain an HDCP version supported by the second network element, or the first message may also include information about an HDCP version supported by the first network element.

S502: The second network element sends a second message to the first network element, where the second message includes information about the HDCP version supported by the second network element.

It may be understood that when at least one version in the HDCP version supported by the second network element is not earlier than the foregoing first preset version, the second message is an example of the first indication information in the method 400.

In some possible implementations, S501 may be skipped, and S502 is directly performed. To be specific, the second network element actively reports, to the first network element, the HDCP version supported by the second network element.

S503: The first network element determines, based on the HDCP version supported by the second network element, a first HDCP version used to transmit audio and video information with the second network element.

The first HDCP version is an HDCP version supported by both the first network element and the second network element, for example, may be an HDCP version, with a highest priority, supported by both the first network element and the second network element.

In some possible implementations, priorities of HDCP versions are: HDCP 2.3 > HDCP 2.2 > HDCP 2.1 > HDCP 2.0, where a priority of a version on the left of ">" is higher than a priority of a version on the right of ">".

In an example, if the first network element supports HDCP 2.0, HDCP 2.1, and HDCP 2.2, and the second network element supports HDCP 2.1 and HDCP 2.2, the first network element may determine to use HDCP 2.2 to transmit the audio and video information with the second network element, that is, the first HDCP version is HDCP 2.2.

In another example, if the first network element supports HDCP 2.0 and HDCP 2.1, and the second network element supports HDCP 2.1 and HDCP 2.2, the first network element may determine to use HDCP 2.1 to transmit the audio and video information with the second network element, that is, the first HDCP version is HDCP 2.1.

S504: When the first HDCP version is not earlier than a preset version, the first network element sends a third message to the second network element, where the third message includes a first random number and capability indication information of the first network element.

For example, the preset version may be the foregoing first preset version, or may be a version later than the first preset version.

It may be understood that the third message is an example of the first authentication message in the method 400.

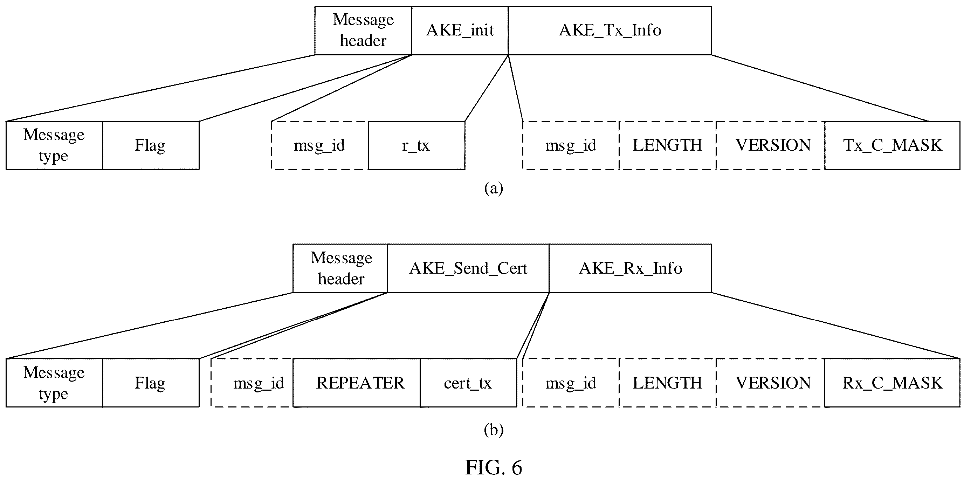

For example, a format of the third message may be shown in (a) in FIG. 6, and includes at least: the first random number, for example, an r_tx field in an AKE_init packet; and the capability indication information of the first network element, for example, a Tx_C_MASK field in an AKE_Tx_Info packet. In addition, the third message may further include a message header. The message header includes a message type (Type) field and a flag (Flag) field. The Type field indicates that a type of the transmitted third message is a message combining the AKE_init packet and the AKE_Tx_Info packet. The Flag field indicates whether the transmitted message includes all content of the AKE_init packet and the AKE_Tx_Info packet. For example, if Flag = 1, the message includes all fields (including fields in dashed-line boxes) of the AKE_init packet and the AKE_Tx_Info packet; or if Flag = 0, the message includes a part of fields (excluding fields in dashed-line boxes) of the AKE_init packet and the AKE_Tx_Info packet.

S505: The second network element determines the type of the third message.

In some possible implementations, the first message sent by the first network element to the second network element includes the information about the HDCP version supported by the first network element. When the second network element may determine, based on the HDCP version supported by the first network element and the HDCP version supported by the second network element, a unique HDCP version used to transmit the audio and video information, and the HDCP version is not earlier than a second preset version, S505 may be skipped, and S506 is directly performed. For example, the second preset version is not earlier than the first preset version.

In some possible implementations, it may be determined, based on the message type field in the third message, that the type of the third message is the message combining the AKE_init packet and the AKE_Tx_Info packet. After it is determined that the type of the third message is the message for combination, S506 is performed.

S506: The second network element sends a fourth message to the first network element, where the fourth message includes information used to authenticate the second network element and capability indication information of the second network element.

It may be understood that the fourth message is an example of the second authentication message in the method 400.

For example, a format of the fourth message may be shown in (b) in FIG. 6, and includes at least: the information used to authenticate the second network element, for example, a cert_tx field and a REPEATER field in an AKE_Send_Cert packet; and the capability indication information of the second network element, for example, an Rx_C_MASK field in an AKE_Rx_Info packet. In addition, the fourth message may further include a message header. The message header includes a Type field and a Flag field. The Type field indicates that a type of the transmitted fourth message is a message combining the AKE_Send_Cert packet and the AKE_Rx_Info packet. The Flag field indicates whether the transmitted message includes all content of the AKE_Send_Cert packet and the AKE_Rx_Info packet. For example, if Flag = 1, the message includes all fields (including fields in dashed-line boxes) of the AKE_Send_Cert packet and the AKE_Rx_Info packet; or if Flag = 0, the message includes a part of fields (excluding fields in dashed-line boxes) of the AKE_Send_Cert packet and the AKE _Rx_Info packet.

According to the communication method provided in this embodiment of this application, the second network element indicates, to the first network element, the information about the HDCP version supported by the second network element, so that the first network element determines whether to perform combined sending of the first random number and the capability indication information of the first network element.

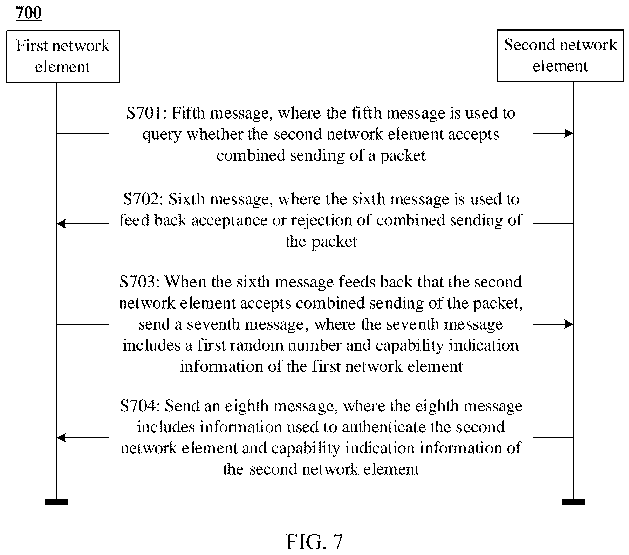

FIG. 7 is a schematic flowchart of a communication method according to an embodiment of this application. The method 700 may be performed by the system shown in FIG. 2, and the method 700 may also be applied to the intelligent driving device 100 shown in FIG. 3. Steps or operations of the communication method shown in FIG. 7 are merely examples for description. In embodiments of this application, other operations or variations of the operations in FIG. 7 may be further performed, and not all the operations in FIG. 7 may need to be performed. The method 700 may be understood as extension of the method 400. The method 700 includes the following steps.

S701: A first network element sends a fifth message to a second network element, where the fifth message is used to query whether the second network element accepts combined sending of a packet.

S702: The second network element sends a sixth message to the first network element, where the sixth message is used to feed back acceptance or rejection of combined sending of the packet.

It may be understood that when the second network element feeds back, to the first network element by using the sixth message, that the second network element accepts combined sending of the packet, it indicates that when at least one of the HDCP version supported by the second network element is not earlier than the foregoing first preset version, the sixth message is an example of the first indication information in the method 400.

In some possible implementations, S701 may be skipped, and S702 is directly performed. To be specific, the second network element actively reports, to the first network element, whether the second network element accepts combined sending of the packet.

S703: When the sixth message feeds back that the second network element accepts combined sending of the packet, the first network element sends a seventh message to the second network element, where the seventh message includes a first random number and capability indication information of the first network element.

It may be understood that the seventh message is an example of the first authentication message in the method 400.

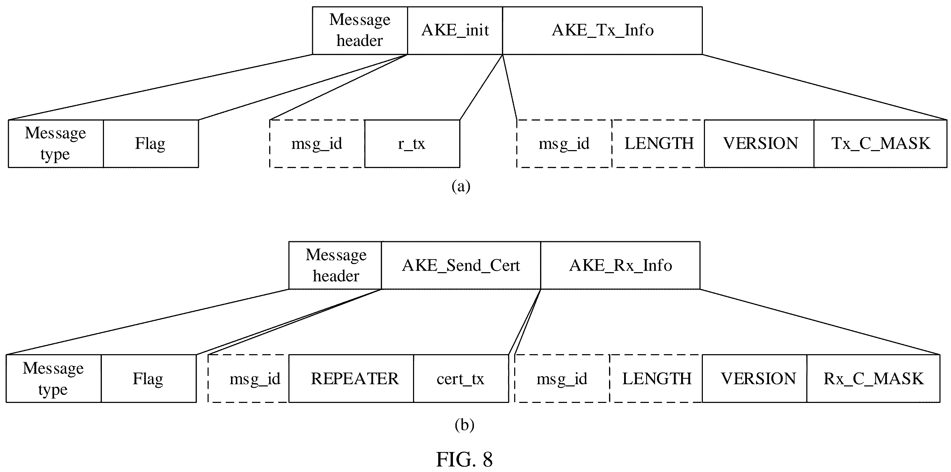

For example, a format of the seventh message may be shown in (a) in FIG. 8. In the message exchange process from S701 to S703, the first network element and the second network element do not exchange related information of the HDCP version. Therefore, the seventh message includes at least: the first random number, for example, an r_tx field in an AKE_init packet; the capability indication information of the first network element, for example, a Tx_C_MASK field in an AKE_Tx_Info packet; and information about an HDCP version used by the first network element to transmit audio and video information with the second network element, for example, a VERSION field in the AKE_Tx_Info packet. In addition, the seventh message may further include a message header. The message header includes a Type field and a Flag field. For purposes of the Type field and the Flag field, refer to the descriptions in the foregoing embodiments. Details are not described herein again.

S704: The second network element sends an eighth message to the first network element, where the eighth message includes information used to authenticate the second network element and capability indication information of the second network element.

It may be understood that the eighth message is an example of the second authentication message in the method 400.

For example, a format of the eighth message may be shown in (b) in FIG. 8, and includes at least: the information used to authenticate the second network element, for example, a cert_tx field and a REPEATER field in an AKE_Send_Cert packet; the capability indication information of the second network element, for example, an Rx_C_MASK field in an AKE_Rx_Info packet; and information about an HDCP version used by the second network element to transmit audio and video information with the first network element, for example, a VERSION field in the AKE_Rx_Info packet. In addition, the eighth message may further include a message header. The message header includes a Type field and a Flag field. For purposes of the Type field and the Flag field, refer to the descriptions in the foregoing embodiments. Details are not described herein again.

It should be noted that in some implementations, the format of the transmitted third message in the method 500 may alternatively be shown in (a) in FIG. 8, and the format of the transmitted fourth message in the method 500 may alternatively be shown in (b) in FIG. 8.

According to the communication method provided in this embodiment of this application, the second network element indicates, to the first network element, whether the second network element supports combined sending of the packet, so that the first network element determines whether to perform combined sending of the first random number and the capability indication information of the first network element.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

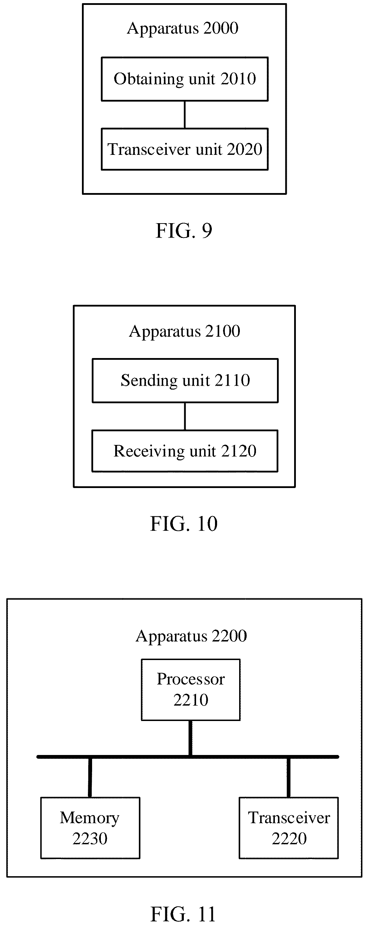

The foregoing describes in detail the methods provided in embodiments of this application with reference to FIG. 1 to FIG. 8. The following describes in detail apparatuses provided in embodiments of this application with reference to FIG. 9 and FIG. 11. It should be understood that descriptions of apparatus embodiments correspond to the descriptions of the method embodiments. Therefore, for content that is not described in detail, refer to the method embodiments. For brevity, details are not described herein again.

FIG. 9 is a block diagram of a communication apparatus 2000 according to an embodiment of this application. The apparatus 2000 includes an obtaining unit 2010 and a transceiver unit 2020.

The apparatus 2000 may include units configured to perform the methods performed by the first network element in FIG. 4, FIG. 5, and FIG. 7. In addition, the units in the apparatus 2000 are respectively used to implement corresponding procedures of the method embodiments performed by the first network element in FIG. 4, FIG. 5, and FIG. 7.

When the apparatus 2000 is configured to perform the method 400 in FIG. 4, the obtaining unit 2010 may be configured to perform S401 in the method 400, and the transceiver unit 2020 may be configured to perform S402 in the method 400.

Specifically, the obtaining unit 2010 is configured to obtain first indication information, where the first indication information indicates that at least one version in a high-bandwidth digital content protection HDCP version supported by a second network element is not earlier than a first preset version; or the first indication information indicates an HDCP version supported by the second network element, and at least one version in the HDCP version supported by the second network element is not earlier than the first preset version; and the transceiver unit 2020 is configured to send a first authentication message to the second network element based on the first indication information, where the first authentication message includes a first random number and capability indication information of the first network element.

In some possible implementations, the first authentication message includes a message type field, the message type field indicates that the first authentication message is a message combining an initialization packet and a first information packet, the initialization packet is used to enable identity authentication on the second network element, the initialization packet includes the first random number, and the first information packet includes the capability indication information.

In some possible implementations, the first authentication message further includes a flag field, and the flag field indicates that the first authentication message includes a part or all of content of the initialization packet and the first information packet.

In some possible implementations, that the first indication information indicates that the at least one version in the HDCP version supported by the second network element is not earlier than the first preset version includes: The first indication information indicates that the second network element supports combined sending of the initialization packet and the first information packet.

In some possible implementations, the transceiver unit 2020 is configured to: before the obtaining unit 2010 obtains the first indication information, send a query message to the second network element, where the query message is used to query whether the second network element accepts combined sending of the initialization packet and the first information packet.

In some possible implementations, the first indication information indicates the HDCP version supported by the second network element, and the transceiver unit 2020 is configured to: before the obtaining unit 2010 obtains the first indication information, send a request message to the second network element, where the request message is used to request to obtain the HDCP version of the second network element; and the obtaining unit 2010 is configured to receive the first indication information sent by the second network element.

In some possible implementations, the first indication information indicates the HDCP version supported by the second network element, and the apparatus further includes a determining unit. The determining unit is configured to determine, based on the first indication information, a first HDCP version used to transmit audio and video information with the second network element, where the first HDCP version is not earlier than a second preset version, and the second preset version is not earlier than the first preset version; and the first network element sends the first authentication message to the second network element, where the first authentication message further includes information about the first HDCP version.

In some possible implementations, the transceiver unit 2020 is further configured to receive a second authentication message sent by the second network element, where the second authentication message includes information used to authenticate the second network element and capability indication information of the second network element.

FIG. 10 is a block diagram of a communication apparatus 2100 according to an embodiment of this application. The apparatus 2100 includes a sending unit 2110 and a receiving unit 2120.

The apparatus 2100 may include units configured to perform the methods performed by the second network element in FIG. 4, FIG. 5, and FIG. 7. In addition, the units in the apparatus 2000 are respectively used to implement corresponding procedures of the method embodiments performed by the second network element in FIG. 4, FIG. 5, and FIG. 7.

Specifically, the sending unit 2110 is configured to send first indication information to a first network element, where the first indication information indicates that at least one version in a high-bandwidth digital content protection HDCP version supported by a second network element is not earlier than a first preset version; or the first indication information indicates an HDCP version supported by the second network element, and at least one version in the HDCP version supported by the second network element is not earlier than the first preset version; and the receiving unit 2120 is configured to receive a first authentication message sent by the first network element, where the first authentication message includes a first random number and capability indication information of the first network element.

In some possible implementations, the first authentication message includes a message type field, the message type field indicates that the first authentication message is a message combining an initialization packet and a first information packet, the initialization packet is used to enable identity authentication on the second network element, the initialization packet includes the first random number, and the first information packet includes the capability indication information.

In some possible implementations, the first authentication message further includes a flag field, and the flag field indicates that the first authentication message includes a part or all of content of the initialization packet and the first information packet.

In some possible implementations, that the first indication information indicates that the at least one version in the HDCP version supported by the second network element is not earlier than the first preset version includes: The first indication information indicates that the second network element supports combined sending of the initialization packet and the first information packet.

In some possible implementations, the receiving unit 2120 is further configured to: before the sending unit 2110 sends the first indication information to the first network element, receive a query message sent by the first network element, where the query message is used to query whether the second network element accepts combined sending of the initialization packet and the first information packet.

In some possible implementations, the first indication information indicates the HDCP version supported by the second network element, and the receiving unit 2120 is further configured to: before the sending unit 2110 sends the first indication information to the first network element, receive a request message sent by the first network element, where the request message is used to request to obtain the HDCP version of the second network element; and the sending unit 2110 is configured to send the first indication information to the first network element based on the request message.

In some possible implementations, the first authentication message further includes information about a first HDCP version used to transmit audio and video information between the first network element and the second network element, the first HDCP version is not earlier than a second preset version, and the second preset version is not earlier than the first preset version.

In some possible implementations, the sending unit 2110 is further configured to send a second authentication message to the first network element, where the second authentication message includes information used to authenticate the second network element and capability indication information of the second network element.

In some possible implementations, the second authentication message is a message combining an initialization response packet and a second information packet, the initialization response packet includes the information used to authenticate the second network element, and the second information packet includes the capability indication information of the second network element; and the sending unit 2110 is configured to send the second authentication message to the first network element based on the message type field.

For example, the obtaining unit 2010 and the transceiver unit 2020 may be disposed in the serializer shown in FIG. 2, or the obtaining unit 2010 and the transceiver unit 2020 may be disposed in the computing platform 150 shown in FIG. 3.

For example, the sending unit 2110 and the receiving unit 2120 may be disposed in the deserializer shown in FIG. 2, or the sending unit 2110 and the receiving unit 2120 may be disposed in the display apparatus 130 or the computing platform 150 shown in FIG. 3.

It should be understood that division into the units of the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

Each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, these units are integrated together and implemented in a form of an SOC. The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

In a specific implementation process, the operations performed by the obtaining unit 2010 and the transceiver unit 2020 may be performed by one processor, or may be performed by different processors. In a specific implementation process, the one or more processors may be processors disposed in the computing platform 150 shown in FIG. 3, or the apparatus 2000 may be a chip disposed in the computing platform 150.

In a specific implementation process, the operations performed by the sending unit 2110 and the receiving unit 2120 may be performed by one processor, or may be performed by different processors. In a specific implementation process, the one or more processors may be processors disposed in the computing platform 150 shown in FIG. 3, or the apparatus 2000 may be a chip disposed in the display apparatus 130 or the computing platform 150.

FIG. 11 is a block diagram of a communication apparatus according to an embodiment of this application. The communication apparatus 2200 shown in FIG. 11 may include a processor 2210, a transceiver 2220, and a memory 2230. The processor 2210, the transceiver 2220, and the memory 2230 are connected through an internal connection path. The memory 2230 is configured to store instructions. The processor 2210 is configured to execute the instructions stored in the memory 2230, to implement the communication methods in the foregoing embodiments. Optionally, the memory 2230 may be coupled to the processor 2210 through an interface, or may be integrated with the processor 2210.

It should be noted that the transceiver 2220 may include but is not limited to a transceiver apparatus such as an input/output interface (input/output interface), to implement communication between the apparatus 2200 and another device or a communication network.

The memory 2230 may be a read-only memory (read-only memory, ROM), a static storage device, a dynamic storage device, or a random access memory (random access memory, RAM).

The transceiver 2220 uses, for example, but is not limited to, a transceiver apparatus such as a transceiver, to implement communication between the apparatus 2200 and another device or a communication network, to receive/send data/information used to implement the communication methods in the foregoing embodiments.

In a specific implementation process, the apparatus 2200 may be disposed in the serializer or the deserializer shown in FIG. 2, or the apparatus 2200 may be disposed in the computing platform 150 shown in FIG. 3.

An embodiment of this application further provides a communication system. The system includes the apparatus 2000 and the apparatus 2100, or includes the apparatus 2200.

An embodiment of this application further provides an intelligent driving device. The intelligent driving device includes the foregoing communication system.

In some possible implementations, the intelligent driving device may be a vehicle.

An embodiment of this application further provides a computer program product. The computer program product includes computer program code. When the computer program code is run on a computer, the computer is enabled to implement the communication methods in the foregoing embodiments of this application.

An embodiment of this application further provides a computer-readable storage medium. The computer-readable medium stores computer instructions. When the computer instructions are run on a computer, the computer is enabled to implement the communication methods in the foregoing embodiments of this application.

An embodiment of this application further provides a chip. The chip includes a circuit, configured to perform the communication methods in the foregoing embodiments of this application.

In an implementation process, steps in the foregoing methods can be implemented through a hardware integrated logic circuit in the processor, or by using instructions in a form of software. The method disclosed with reference to embodiments of this application may be directly performed by a hardware processor, or may be performed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first network element, first indication information, wherein the first indication information indicates that at least one version in a high-bandwidth digital content protection HDCP version supported by a second network element is not earlier than a first preset version; or the first indication information indicates an HDCP version supported by the second network element, and at least one version in the HDCP version supported by the second network element is not earlier than the first preset version; and
sending, by the first network element, a first authentication message to the second network element based on the first indication information, wherein the first authentication message comprises a first random number and capability indication information of the first network element.

2. The method according to claim 1, wherein the first authentication message comprises a message type field, the message type field indicates that the first authentication message is a message combining an initialization packet and a first information packet, the initialization packet is used to enable identity authentication on the second network element, the initialization packet comprises the first random number, and the first information packet comprises the capability indication information.

3. The method according to claim 2, wherein the first authentication message further comprises a flag field, and the flag field indicates that the first authentication message comprises a part or all of content of the initialization packet and the first information packet.

4. The method according to claim 2 or 3, wherein that the first indication information indicates that the at least one version in the HDCP version supported by the second network element is not earlier than the first preset version comprises: the first indication information indicates that the second network element supports combined sending of the initialization packet and the first information packet.

5. The method according to claim 4, wherein before the obtaining, by the first network element, the first indication information, the method further comprises:
sending, by the first network element, a query message to the second network element, wherein the query message is used to query whether the second network element accepts combined sending of the initialization packet and the first information packet.

6. The method according to any one of claims 1 to 3, wherein the first indication information indicates the HDCP version supported by the second network element, and before the obtaining, by the first network element, the first indication information, the method further comprises:
sending, by the first network element, a request message to the second network element, wherein the request message is used to request to obtain the HDCP version of the second network element; and
the obtaining, by the first network element, the first indication information comprises:
receiving, by the first network element, the first indication information sent by the second network element.

7. The method according to any one of claims 1 to 3, wherein the first indication information indicates the HDCP version supported by the second network element, and the method further comprises:
determining, by the first network element based on the first indication information, a first HDCP version used to transmit audio and video information with the second network element, wherein the first HDCP version is not earlier than a second preset version, and the second preset version is not earlier than the first preset version; and
sending, by the first network element, the first authentication message to the second network element, wherein the first authentication message further comprises information about the first HDCP version.

8. The method according to any one of claims 1 to 7, wherein the method further comprises:
receiving, by the first network element, a second authentication message sent by the second network element, wherein the second authentication message comprises information used to authenticate the second network element and capability indication information of the second network element.

9. A communication method, comprising:
sending, by a second network element, first indication information to a first network element, wherein the first indication information indicates that at least one version in a high-bandwidth digital content protection HDCP version supported by the second network element is not earlier than a first preset version; or the first indication information indicates an HDCP version supported by the second network element, and at least one version in the HDCP version supported by the second network element is not earlier than the first preset version; and
receiving, by the second network element, a first authentication message sent by the first network element, wherein the first authentication message comprises a first random number and capability indication information of the first network element.

10. The method according to claim 9, wherein the first authentication message comprises a message type field, the message type field indicates that the first authentication message is a message combining an initialization packet and a first information packet, the initialization packet is used to enable identity authentication on the second network element, the initialization packet comprises the first random number, and the first information packet comprises the capability indication information.

11. The method according to claim 10, wherein the first authentication message further comprises a flag field, and the flag field indicates that the first authentication message comprises a part or all of content of the initialization packet and the first information packet.

12. The method according to claim 10 or 11, wherein that the first indication information indicates that the at least one version in the HDCP version supported by the second network element is not earlier than the first preset version comprises: the first indication information indicates that the second network element supports combined sending of the initialization packet and the first information packet.

13. The method according to claim 12, wherein before the sending, by the second network element, the first indication information to the first network element, the method further comprises:
receiving, by the second network element, a query message sent by the first network element, wherein the query message is used to query whether the second network element accepts combined sending of the initialization packet and the first information packet.

14. The method according to any one of claims 9 to 11, wherein the first indication information indicates the HDCP version supported by the second network element, and before the sending, by the second network element, the first indication information to the first network element, the method further comprises:
receiving, by the second network element, a request message sent by the first network element, wherein the request message is used to request to obtain the HDCP version of the second network element; and
the sending, by the second network element, the first indication information to the first network element comprises:
sending, by the second network element, the first indication information to the first network element based on the request message.

15. The method according to any one of claims 9 to 11, wherein the first authentication message further comprises information about a first HDCP version used to transmit audio and video information between the first network element and the second network element, the first HDCP version is not earlier than a second preset version, and the second preset version is not earlier than the first preset version.

16. The method according to any one of claims 9 to 15, wherein the method further comprises:
sending, by the second network element, a second authentication message to the first network element, wherein the second authentication message comprises information used to authenticate the second network element and capability indication information of the second network element.

17. The method according to claim 16, wherein the second authentication message is a message combining an initialization response packet and a second information packet, the initialization response packet comprises the information used to authenticate the second network element, the second information packet comprises the capability indication information of the second network element, and the sending, by the second network element, a second authentication message to the first network element comprises:
sending, by the second network element, the second authentication message to the first network element based on the message type field.

18. A communication apparatus, comprising an obtaining unit and a transceiver unit, wherein
the obtaining unit is configured to obtain first indication information, wherein the first indication information indicates that at least one version in a high-bandwidth digital content protection HDCP version supported by a second network element is not earlier than a first preset version; or the first indication information indicates an HDCP version supported by the second network element, and at least one version in the HDCP version supported by the second network element is not earlier than the first preset version; and
the transceiver unit is configured to send a first authentication message to the second network element based on the first indication information, wherein the first authentication message comprises a first random number and capability indication information of the first network element.

19. The apparatus according to claim 18, wherein the apparatus is further configured to perform the method according to any one of claims 2 to 8.

20. A communication apparatus, comprising a sending unit and a receiving unit, wherein
the sending unit is configured to send first indication information to a first network element, wherein the first indication information indicates that at least one version in a high-bandwidth digital content protection HDCP version supported by a second network element is not earlier than a first preset version; or the first indication information indicates an HDCP version supported by the second network element, and at least one version in the HDCP version supported by the second network element is not earlier than the first preset version; and
the receiving unit is configured to receive a first authentication message sent by the first network element, wherein the first authentication message comprises a first random number and capability indication information of the first network element.

21. The apparatus according to claim 20, wherein the apparatus is further configured to perform the method according to any one of claims 10 to 17.

22. A communication apparatus, comprising:
a memory, configured to store a computer program; and
a processor, configured to execute the computer program stored in the memory, to enable the apparatus to perform the method according to any one of claims 1 to 8.

23. A communication apparatus, comprising:
a memory, configured to store a computer program; and
a processor, configured to execute the computer program stored in the memory, to enable the apparatus to perform the method according to any one of claims 9 to 17.

24. A communication system, comprising the apparatus according to claim 18 or 19 and the apparatus according to claim 20 or 21; or comprising the apparatuses according to claims 22 and 23.

25. An intelligent driving device, comprising the system according to claim 24.

26. A computer-readable storage medium, wherein the computer-readable storage medium stores instructions; and when the instructions are executed by a processor, the processor is enabled to implement the method according to any one of claims 1 to 17.

27. A chip, wherein the chip comprises a circuit, and the circuit is configured to perform the method according to any one of claims 1 to 17.
